(19) Europäisches Patentamt
European Patent Office
Office européen des brevets

(11) **EP 3 055 352 B1**

(12) **EUROPÄISCHE PATENTSCHRIFT**

(45) Veröffentlichungstag und Bekanntmachung des Hinweises auf die Patenterteilung:
**13.09.2017 Patentblatt 2017/37**

(21) Anmeldenummer: **14780809.1**

(22) Anmeldetag: **29.09.2014**

(51) Int Cl.:
*C08J 9/18* *(2006.01)* $\quad$ *C08J 9/12* *(2006.01)*
*C08J 9/14* *(2006.01)* $\quad$ *C08J 9/232* *(2006.01)*
*C08J 9/236* *(2006.01)* $\quad$ *B29C 44/34* *(2006.01)*

(86) Internationale Anmeldenummer:
**PCT/EP2014/070727**

(87) Internationale Veröffentlichungsnummer:
**WO 2015/052019 (16.04.2015 Gazette 2015/15)**

(54) **VERFAHREN ZUR HERSTELLUNG VON EXPANDIERTEN POLYESTER-SCHAUMSTOFFPARTIKELN**

METHOD FOR THE PREPARATION OF EXPANDED POLYESTER FOAM PARTICLES

PROCÉDÉ DE FABRICATION DE PARTICULES EN MOUSSE DE POLYESTER EXPANSÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2013 EP 13187895**

(43) Veröffentlichungstag der Anmeldung:
**17.08.2016 Patentblatt 2016/33**

(73) Patentinhaber: **BASF SE**
**67056 Ludwigshafen am Rhein (DE)**

(72) Erfinder: **KEPPELER, Uwe**
**67126 Hochdorf-Assenheim (DE)**

(74) Vertreter: **BASF IP Association**
**BASF SE**
**G-FLP-C006**
**67056 Ludwigshafen (DE)**

(56) Entgegenhaltungen:
**EP-A1- 1 378 538**

**Beschreibung**

Die Erfindung betrifft ein Verfahren zur Herstellung von expandierten Schaumstoffpartikeln aus einem Granulat, enthaltend Polyestermischung zusammengesetzt aus:

a) 50 bis 99 Gew.-%, bezogen auf die Komponenten a und b, eines biologisch abbaubaren Polyesters auf Basis von aliphatischen oder aliphatischen und aromatischen Dicarbonsäuren und aliphatischen Diolen, und zu
b) 1 bis 50 Gew.-%, bezogen auf die Komponenten a und b, Polymilchsäure.

umfassend die folgenden Schritte:

(i) Herstellen einer Suspension enthaltend ein Granulat der Polyestermischung in einem Suspendiermedium,
(ii) Imprägnieren des in der Suspension aus Schritt (i) enthaltenen Granulates mit mindestens einem physikalischen Treibmittel, um ein mit Treibmittel beladenes Granulat in Suspension zu erhalten, indem die Mischung unter Rühren bis zur Entspannungstemperatur IMT aufgeheizt wird und
(iii) Entspannen der in Schritt (ii) erhaltenen Suspension nach Ablauf der Haltezeit, um expandierte Schaumstoffpartikel zu erhalten,

dadurch gekennzeichnet, dass in einem wasserhaltigen Suspendiermittel gefahren wird, das Treibmittel in Schritt i oder in Schritt ii während der Aufheizphase oder unmittelbar nach der Aufheizphase zugegeben wird und in Schritt ii die Suspension nach dem Aufheizen während 3 bis 100 Minuten bei einer Temperatur im Bereich von IMT minus 5°C bis IMT plus 2°C gehalten wird, und die Entspannungstemperatur im Bereich von 100 bis 140°C liegt.

Schaumstoffe aus Kunststoffen sind künstlich hergestellte Stoffe mit zelliger Struktur über deren komplettes Volumen und haben eine niedrigere Dichte als das kompakte Material aus dem sie hergestellt wurden. Durch die oft einzigartige Kombination ihrer mechanischen Eigenschaften trotz niedriger Dichten, wird deren Bedeutung als Leichtbau-Werkstoff stetig größer. Durch die oft sehr niedrigen Wärmeleitfähigkeiten, haben einige Schaumstoffe erhebliche Bedeutung als Dämmstoff.

Nach dem Gebrauch von Schaumstoffen aus Kunststoff ist teilweise die Entsorgung mit Problemen verbunden. Neben dem energetischen Recycling ist oft auch ein stoffliches Recycling möglich. Wünschenswert wäre jedoch eine biologische Abbaubarkeit beispielsweise in einer Kompostieranlage.

Schaumstoffe auf Polyesterbasis sind aus verschiedenen Veröffentlichungen bekannt. Üblicherweise werden solche Schaumstoffe durch ein Extrusionsverfahren hergestellt.

Nachteil dieses Verfahrens ist, dass damit im Allgemeinen nur einfache Formen wie Blöcke, Platten und dünne Schichten (Schaumstofffolien) hergestellt werden können. Oftmals ist mit diesem Verfahren auch die maximale Dicke mit denen Blöcke hergestellt werden können begrenzt. Durch die Verwendung von Schaumstoffpartikeln können hingegen Formteile nahezu beliebiger Geometrie hergestellt werden.

WO 2008/130226 beschreibt beispielsweise die Herstellung von expandierbaren Polymilchsäurepartikeln, die mit speziellen Additiven beschichtet sind, und daraus erhältliche Schaumstoffpartikel. Hierbei kommen Extrusionsverfahrens zum Einsatz. Die daraus hergestellten Formteile sind jedoch hinsichtlich ihrer mechanischen Eigenschaften für Anwendungen, die hohe Zugfestigkeiten und Druckspannung erfordern, nicht immer geeignet.

Die beschriebenen Probleme können mit dem sogenannten Autoklavverfahren wie es beispielsweise in Ullmann's Encyclopedia of Industrial Chemistry, Vol. A11 1988 beschrieben ist, umgangen werden.

Das Anforderungsprofil an die hiermit hergestellten Schaumstoffpartikel bzw. an die daraus resultierenden Formteile kann je nach Anwendungsgebiet recht unterschiedlich sein. Dennoch können für die Eignung des Verfahrens für verschiedene Werkstoffe gemeinsame Mindestanforderungen definiert werden. Diese sind:

• Die Herstellbarkeit von Schaumstoffpartikel über einen breiten Schüttdichtebereich, wobei insbesondere eine möglichst niedrige Schüttdichte unabhängig von Partikelgeometrie und Größe erreichbar sein sollte. Ein geringes Gewicht der resultierenden Formteile führt zu Kosteneinsparungen.
• Die Herstellbarkeit der Schaumstoffpartikel mit möglichst geringer Partikelgrößenverteilung PGV innerhalb einer Charge in möglichst großer Ausbeute.
• Schaumstoffpartikel mit überwiegend geschlossenzelliger Schaumstoffstruktur. Dies führt zu guter Verarbeitbarkeit mit handelsüblichen Formteilautomaten im Druckfüllverfahren und zu geringer Wasseraufnahme.
• Vollständige Imprägnierung der Polymerpartikeln zu Schaumstoffpartikel ohne kompakten Kern. (Keine Beeinträchtigung der mechanischen Eigenschaften sowie der Haptik der resultierenden Formteile.)

Zur Erfüllung dieser Anforderungen können bei dem Autoklavverfahren zahlreiche Parameter variiert werden. Diese sind u.a. das Suspendiermedium, der Treibmittel-Typ und dessen Konzentration, die Aufheizkurve und die Imprägniertemperatur (IMT). Besonders geeignete Parameter oder eine besonders geeignete Parameterkombination kann dabei im Allgemeinen nicht von einem Werkstoff auf den anderen übertragen werden.

WO 00/68303 beschreibt allgemein die Herstellung von expandierten Polymerpartikel auf Basis bioabbaubaren gesättigten Polyestern in einem Autoklavverfahren. Hierbei wird als Suspensionsmedium vorzugsweise Ethylenglykol und Glycerin mit einer Dichte zwischen 1,1 und 1,25 g/cm$^3$ verwendet. Diese Verfahren kann hinsichtlich der Fahrweise, der Prozessfähigkeit und des Eigenschaftsprofils der damit zugänglichen expandierten Schaumstoffpartikel nicht immer voll überzeugen.

EP 1683828 beschreibt die Herstellung von expandierbaren Polymerpartikel auf Basis von Mischungen unterschiedlicher Polymilchsäure in einem Autoklavverfahren Hier werden sehr niedrige Imprägniertemperaturen und Imprägnierzeiten von mehreren Stunden gewählt. Diese expandierbaren Polymerpartikel werden anschließend in einem separaten Schritt zu expandierten Polymerpartikeln aufgeschäumt.

EP 1378538 beschreibt expandierte Kügelchen auf Basis von Mischungen von semikristalliner und amorpher Polymilchsäure, wobei die Kügelchen mindestens 50% Polymilchsäure enthalten. Auch hier werden sehr niedrige Imprägniertemperaturen und Imprägnierzeiten von mehreren Stunden gewählt. Wir haben nun ein prozessfähiges Autoklavverfahren gefunden zur direkten Herstellung von expandierten Schaumstoffpartikeln aus einem Granulat, enthaltend eine Polyestermischung, zusammengesetzt aus:

a) 50 bis 99 Gew.-%, bezogen auf die Komponenten a und b, eines biologisch abbaubaren Polyesters auf Basis von aliphatischen oder aliphatischen und aromatischen Dicarbonsäuren und aliphatischen Diolen, und zu

b) 1 bis 50 Gew.-%, bezogen auf die Komponenten a und b, Polymilchsäure.

umfassend die folgenden Schritte:

(i) Herstellen einer Suspension enthaltend ein Granulat der Polyestermischung in einem Suspendiermedium,

(ii) Imprägnieren des in der Suspension aus Schritt (i) enthaltenen Granulates mit mindestens einem physikalischen Treibmittel, um ein mit Treibmittel beladenes Granulat in Suspension zu erhalten, indem die Mischung unter Rühren bis zur Entspannungstemperatur IMT aufgeheizt wird und

(iii) Entspannen der in Schritt (ii) erhaltenen Suspension nach Ablauf der Haltezeit, um expandierte Schaumstoffpartikel zu erhalten,

dadurch gekennzeichnet, dass in einem wasserhaltigen Suspendiermittel gefahren wird, das Treibmittel in Schritt i oder in Schritt ii während der Aufheizphase oder unmittelbar nach der Aufheizphase zugegeben wird und in Schritt ii die Suspension nach dem Aufheizen während 3 bis 100 Minuten bei einer Temperatur im Bereich von IMT minus 5°C bis IMT plus 2°C gehalten wird, und die Entspannungstemperatur im Bereich von 100 bis 140°C liegt.

Mit diesem Verfahren lassen sich ohne die vorher beschriebenen Probleme prozessfähig expandierte Schaumstoffpartikel herstellen die den vorher beschriebenen Mindestanforderungen entsprechen. Die Schaumstoffpartikel lassen sich überraschenderweise einfach zu Formteilen verarbeiten, die hervorragende mechanische Eigenschaften hinsichtlich Zugfestigkeit, und Druckspannung t aufweisen.

Im Folgenden wird die Erfindung näher beschrieben.

Für das erfindungsgemäße Verfahren zur Herstellung expandierter Schaumstoffpartikel sind Granulate geeignet, enthaltend die eingangs genannten Polyestermischungen a, b.

Die Komponente a ist ein biologisch abbaubare Polyester auf Basis von aliphatischen oder aliphatischen und aromatischen Dicarbonsäuren und aliphatischen Dihydroxyverbindungen. Letztere werden auch als teilaromatische Polyester bezeichnet. Gemeinsam ist diesen Polyestern, dass sie biologisch abbaubar nach DIN EN 13432 sind. Selbstverständlich sind auch Mischungen mehrerer solcher Polyester geeignet.

Unter teilaromatischen (aliphatisch-aromatischen) Polyestern sollen erfindungsgemäß auch Polyesterderivate verstanden werden, die bis zu 10 mol% andere Funktionen als Esterfunktionen enthalten wie Polyetherester, Polyesteramide oder Polyetheresteramide und Polyesterurethane. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus den eingangs genannten Schriften WO 96/15173 bis 15176, 21689 bis 21692, 25446, 25448 oder der WO 98/12242 bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie WO2010/034689). Insbesondere sind unter teilaromatischen Polyestern Produkte wie ecoflex® (BASF SE) und Eastar® Bio, Origo-Bi® (Novamont) zu verstehen.

Zu den bevorzugten aliphatischen und besonders bevorzugten teilaromatischen Polyestern zählen Polyester, die als wesentliche Komponenten enthalten:

A1) 30 bis 100 mol-%, vorzugsweise 30 bis 70 und insbesondere bevorzugt 40 bis 60 mol-%, bezogen auf die Komponenten A1) bis A2), einer aliphatischen Dicarbonsäure oder Mischungen davon,

A2) 0 bis 70 mol-%, vorzugsweise 30 bis 70 und insbesondere bevorzugt 40 bis 60 mol-%, bezogen auf die Komponenten A1) bis A2), einer aromatischen Dicarbonsäure oder Mischungen davon,

B) 98,5 bis 100 mol-%, bezogen auf die Komponenten A1) bis A2), einer Diolkomponente aus einem $C_2$- bis $C_{12}$-Alkandiol oder Mischungen davon; und

C) 0,05 bis 1,5 Gew.-% bezogen auf die Komponenten A1) bis A2) und B, einer Verbindung oder mehrerer Verbindungen ausgewählt aus der Gruppe bestehend aus:

C1) einer Verbindung mit mindestens drei zur Esterbildung befähigten Gruppen,

C2) einem di- oder polyfunktionellen Isocyanat,

C3) einem di- oder polyfunktionellen Epoxid.

Als aliphatische Säuren und die entsprechenden Derivate a1 kommen im Allgemeinen solche mit 2 bis 18 Kohlenstoffatomen, vorzugsweise 4 bis 10 Kohlenstoffatomen, in Betracht. Sie können sowohl linear als auch verzweigt sein. Prinzipiell können jedoch auch Dicarbonsäuren mit einer größeren Anzahl an Kohlenstoffatomen, beispielsweise mit bis zu 30 Kohlenstoffatomen, eingesetzt werden.

Beispielhaft zu nennen sind: Oxalsäure, Malonsäure, Bernsteinsäure, Glutarsäure, 2-Methylglutarsäure, 3-Methylglutarsäure, α-Ketoglutarsäure, Adipinsäure, Pimelinsäure, Azelainsäure, Sebacinsäure, Brassylsäure, Fumarsäure, 2,2-Dimethylglutarsäure, Suberinsäure (Korksäure), Diglykolsäure, Oxalessigsäure, Glutaminsäure, Asparaginsäure, Itaconsäure und Maleinsäure. Dabei können die Dicarbonsäuren oder deren esterbildenden Derivate, einzeln oder als Gemisch aus zwei oder mehr davon eingesetzt werden.

Bevorzugt werden Bernsteinsäure, Adipinsäure, Azelainsäure, Sebacinsäure, Brassylsäure oder deren jeweilige esterbildenden Derivate oder Mischungen davon eingesetzt. Besonders bevorzugt werden Bernsteinsäure, Adipinsäure oder Sebacinsäure oder deren jeweilige esterbildenden Derivate oder Mischungen davon eingesetzt. Bernsteinsäure, Azelainsäure, Sebacinsäure und Brassylsäure haben zudem den Vorteil, dass sie aus nachwachsenden Rohstoffen zugänglich sind.

Insbesondere bevorzugt sind die folgenden aliphatisch-aromatischen Polyester: Polybutylenadipatterephthalat (PBAT), Polybutylensebacatterephthalat (PBSeT) oder Polybutylensuccinatterephthalat (PBST) und ganz besonders bevorzugt Polybutylenadipatterephthalat (PBAT) und Polybutylensebacatterephthalat (PBSeT).

Die aromatischen Dicarbonsäuren oder deren esterbildende Derivate A2 können einzeln oder als Gemisch aus zwei oder mehr davon eingesetzt werden. Besonders bevorzugt wird Terephthalsäure oder deren esterbildende Derivate wie Dimethylterephthalat, verwendet.

Im Allgemeinen werden die Diole B unter verzweigten oder linearen Alkandiolen mit 2 bis 12 Kohlenstoffatomen, bevorzugt 4 bis 6 Kohlenstoffatomen, oder Cycloalkandiolen mit 5 bis 10 Kohlenstoffatomen ausgewählt.

Beispiele geeigneter Alkandiole sind Ethylenglykol, 1,2-Propandiol, 1,3-Propandiol, 1,2-Butandiol, 1,4-Butandiol, 1,5-Pentandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 2,2,4-Trimethyl-1,5-hexandiol, insbesondere Ethylenglykol, 1,3-Propandiol, 1,4-Butandiol und 2,2-Dimethyl- 1,3-propandiol (Neopentylglykol). Besonders bevorzugt sind 1,4-Butandiol und 1,3- Propandiol. Letztere haben zudem den Vorteil, dass sie als nachwachsender Rohstoff zugänglich sind. Es können auch Mischungen unterschiedlicher Alkandiole verwendet werden.

In der Regel werden 0,01 bis 2 Gew-%, vorzugsweise 0,1 bis 1,0 Gew.-% und insbesondere bevorzugt 0,1 bis 0,3 Gew.-%, bezogen auf das Gesamtgewicht des Polyesters, eines Verzweigers (C1) und/oder 0,1 bis 1,0 Gew.- %, bezogen auf das Gesamtgewicht des Polyesters, eines Kettenverlängerers (C2 oder C3) eingesetzt. Der Verzweiger ist bevorzugt ausgewählt aus der Gruppe bestehend aus: einem polyfunktionellen Isocyanat, Isocyanurat, Oxazolin, Epoxid, Peroxid, Carbonsäureanhydrid, einem mindestens trifunktionellen Alkohol oder einer mindestens trifunktionellen Carbonsäure. Als Kettenverlängerer kommen insbesondere difunktionelle Isocyanate, Isocyanurate, Oxazoline, Carbonsäureanhydrid oder Epoxide in Frage.

Besonders bevorzugte Verzweiger haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponente C lassen sich biologisch abbaubare Polyester mit einer strukturellen Viskosität aufbauen. Die biologisch abbaubaren Polyester lassen sich leichter verarbeiten.

Die Polyester weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50)). Der Schmelzpunkt liegt im Bereich von 85 bis 150, bevorzugt im Bereich von 95 bis 140°C.

Die bevorzugten teilaromatischen Polyester sind charakterisiert durch ein Molekulargewicht (Mn) im Bereich von 1000 bis 100000, insbesondere im Bereich von 9000 bis 75000 g/mol, bevorzugt im Bereich von 10000 bis 50000 g/mol und einem Schmelzpunkt im Bereich von 60 bis 170, bevorzugt im Bereich von 80 bis 150°C.

Unter aliphatischen Polyestern werden Polyester aus aliphatischen Diolen und aliphatischen Dicarbonsäuren wie Polybutylensuccinat (PBS), Polybutylenadipat (PBA), Polybutylensuccinatadipat (PBSA), Polybutylensuccinatsebacat (PBSSe), Polybutylensebacat (PBSe) oder entsprechende Polyesteramide oder Polyesterurethane verstanden. Die aliphatischen Polyester werden beispielsweise von den Firmen Showa Highpolymers unter dem Namen Bionolle und von Mitsubishi unter dem Namen GSPla vermarktet. Neuere Entwicklungen sind in der WO 2010034711 beschrieben. Bevorzugte aliphatische Polyester sind Polybutylensuccinatsebacat (PBSSe) und insbesondere bevorzugt Polybutylensuccinat (PBS).

Die aliphatischen Polyester weisen in der Regel Viskositätszahlen nach DIN 53728 von 150 bis 320 cm$^3$/g und vorzugsweise 150 bis 250 cm$^3$/g auf.

Der MVR (Schmelzvolumenrate) nach EN ISO 1133 (190°C, 2,16 kg Gewicht) liegt im Allgemeinen bei 0,1 bis 70, bevorzugt bei 0,8 bis 60 und insbesondere bei 1 bis 50 cm$^3$/10 min.

Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g. Die Polyester können auch Mischungen aus aliphatisch-aromatischen Polyestern und rein aliphatischen Polyestern enthalten wie beispielsweise Mischungen aus PBAT und PBS.

Als Komponente b) wird Polymilchsäure mit dem folgenden Eigenschaftsprofil bevorzugt eingesetzt: einer Schmelzvolumenrate (MVR bei 190° C und 2.16 kg nach ISO 1133) von 0.5 bis 15 bevorzugt 1 bis 9, besonders bevorzugt 2 bis 8 ml/10 Minuten; einem Schmelzpunkt unter 180° C; einem Glaspunkt (Tg) größer 40°C; einem Wassergehalt von kleiner 1000 ppm; einem Monomeren-Restgehalt (Lactid) von kleiner 0.3% und einem Molekulargewicht von größer 50 000 Dalton.

Bevorzugte Polymilchsäuren sind beispielsweise von NatureWorks® das Ingeo® 2002 D, 4032 D, 4042 D und 4043 D, 8251 D, 3251 D und 8051 D. Ingeo® 8051 D beispielsweise ist eine Polymilchsäure der Fa. NatureWorks, mit den folgenden Produkteigenschaften: Tg: 65,3°C, Tm: 153,9°C, MVR: 6,9 [ml/10 Minuten], Mw:186000, Mn:107000.

Polyestermischungen enthaltend die Komponenten a und b werden von BASF SE unter dem Markennamen ecovio® gehandelt. Durch Zumischen der steiferen Komponente Polymilchsäure lassen sich die Anwendungseigenschaften der Schaumstoffpartikel geradezu maßschneidern. Die Polyesterkomponente a) sollte jedoch die kontinuierliche Phase in der Mischung bilden, um ein prozessfähiges Verfahren zu garantieren. Polymilchsäure ist unter den Verfahrensbedingungen hydrolyselabil, was sich insbesondere bemerkbar macht, wenn Polymilchsäure (b) die kontinuierliche Phase ausbildet.

Die Polyestermischungen enthalten:

a) 50 bis 99 Gew.-%, vorzugsweise 60 bis 95 Gew.-%, und insbesondere bevorzugt 70 bis 90 Gew.-%, bezogen auf die Komponenten a und b, eines aliphatischen oder teilaromatischen Polyesters wie er zuvor beschrieben worden ist, und
b) 1 bis 50 Gew.-%, vorzugsweise 5 bis 40 Gew.-%, und insbesondere bevorzugt 10 bis 30 Gew.-%, bezogen auf die Komponenten a und b, Polymilchsäure.

Die einzelnen Schritte (i) bis (iii) des erfindungsgemäßen Verfahrens werden im Folgenden detailliert beschrieben.

Schritt (i) des erfindungsgemäßen Verfahrens umfasst das Herstellen einer Suspension enthaltend ein Granulat der zuvor beschriebenen Polyestermischung in einem Suspendiermedium.

In Schritt (i) des erfindungsgemäßen Verfahrens wird die Polyestermischung in Form eines Granulates eingesetzt. Das Verfahren erlaubt die Verwendung einer breiten Spanne unterschiedlicher Partikelgrößen und damit auch Partikelgewichte. Die Partikelgröße (das Partikeigewicht) ist jedoch eine der entscheidenden Kennwerte, die die Wahl der richtigen Herstellparameter beeinflussen.

Das Partikelgewicht bestimmt das Gewicht und beeinflusst die Größe der expandierten Schaumstoffpartikel. Je nach Anwendung sind unterschiedliche Partikelgröße und Schüttdichte der Schaumstoffpartikel bevorzugt.

Das Polyestergranulat kann mittlere Durchmesser von 0,2 bis 10 mm, insbesondere von 0,5 bis 5 mm aufweisen. Dieses bevorzugt zylinderförmige oder runde Granulat kann durch alle dem Fachmann bekannte Verfahren hergestellt werden, insbesondere durch Extrudieren des Polyesters, gegebenenfalls zusammen mit weiteren Zusatzstoffen, Auspressen aus dem Extruder, gegebenenfalls Abkühlen und Granulieren. Ein solches bevorzugt in Schritt (i) eingesetztes Granulat wird auch "Minigranulat" genannt. Die einzelnen Partikel eines solchen Granulates haben im Allgemeinen ein Gewicht von 0,5 bis 100 mg/Partikel. Bevorzugt sind Partikel mit einem mittleren Partikelgewicht (arithmetrisches Mittel) von 5 bis 60 mg/Partikel. EP 1 182 225 B1 beschreibt ein Verfahren zur Herstellung eines Polyethylen-Granulats, das analog auch zur Herstellung des Polyestergranulats geeignet ist.

Das in Schritt (i) des erfindungsgemäßen Verfahrens bevorzugt eingesetzte Granulat kann gegebenenfalls weitere Additive enthalten.

Dies können z.B. Nukleierungsmittel sein, durch die die Zelligkeit beeinflusst werden kann. Diese werden in der Regel in Mengen von 0,001 bis 10,0%, bevorzugt 0,01 bis 1,0 %, ganz besonders bevorzugt 0,02 bis 0,2%, bezogen auf das Granulat eingesetzt. Geeignet sind z. B. Talkum, Paraffine und/oder Wachse sowie Ruß, Graphit und pyrogene Kieselsäuren, ferner natürliche oder synthetische Zeolithe und, gegebenenfalls modifizierte, Bentonite, besonders bevorzugt ist Talkum.

Das in Schritt (i) bevorzugt eingesetzte Granulat kann des Weiteren übliche Zusatzstoffe wie Antioxidantien, Stabilisatoren, Flammschutzmittel, Wachse, Füllstoffe, Pigmente und Farbstoffe enthalten. Geeignete Additive sind dem Fachmann an sich bekannt und beispielsweise in EP 1 514 896 A1 aufgeführt.

Das Granulat wird in Schritt (i) des erfindungsgemäßen Verfahrens in einem geeigneten Suspendiermedium suspendiert. Im Allgemeinen sind alle dem Fachmann als geeignet bekannten Suspendiermedien verwendbar, bei denen gewährleistet ist, dass sich das eingesetzte Granulat darin nicht löst. Erfindungsgemäß besonders geeignete wasserhaltige Suspendiermedien sind beispielsweise Wasser, oder Mischungen von Wasser mit 5 bis 50 Gew.-%, bezogen auf die Mischung, eines polaren organischen Lösungsmittel, wie beispielsweise Methanol, Ethanol, Propanole wie iso-Propanol, Glycerin, Ethylenglycol, oder Ketone, wie Aceton, oder Mischungen der organischen Lösungsmittel. Um mit möglichst geringem Rühraufwand eine möglichst homogenen Suspension des Granulats zu erhalten, wurde in der WO00/68303 bevorzugt ein Suspendiermedium gewählt, das eine vergleichbare Dichte wie das Granulat - also Dichten zwischen 1,1 und 1,3 kg/m$^3$ aufweist. In WO 00/68303 wird daher empfohlen, Flüssigkeiten wie Ethylenglykol und Glycerin mit Dichten zwischen 1,1 und 1,3 kg/m$^3$ als Suspendiermedium zu verwenden. Stoffe wie z.B. Ethylenglykol sind jedoch gesundheitsschädlich und bilden oberhalb des Flammpunkts entzündliche Dampf-Luft-Gemische. Überraschend wurde nun gefunden, dass in Schritt (i) des erfindungsgemäßen Verfahrens eine wässrige Mischung oder bevorzugt Wasser als Suspendiermedium verwendet werden kann, das die zuvor genannten Nachteile nicht aufweist. Wasserhaltige Suspendiermedien liefern jedoch kein prozessfähiges Verfahren, wenn Polymilchsäure b) in den Polyestermischungen die kontinuierliche Phase bildet. Polymichsäure b sollte in den in Schritt i eingesetzten Polyestermischungen daher in nicht mehr als 50 Gew.-% enthalten sein.

Die Menge an Suspendiermedium in der Suspension wird im Allgemeinen so gewählt, dass das Phasenverhältnis von in Schritt (i) eingesetztem Granulat zu Suspendiermedium > 0,2, bevorzugt > 0,25, beträgt. Das Phasenverhältnis von in Schritt (i) eingesetztem Granulat zu Suspendiermedium beträgt im Allgemeinen < 1,20, bevorzugt < 1,00, besonders bevorzugt < 0,80. Das erfindungsgemäße Phasenverhältnis betrifft das Verhältnis von Granulat, gemessen in Kilogramm, zu Suspendiermedium, ebenfalls in Kilogramm. Dem Fachmann ist bekannt, wie das erfindungsgemäße Verhältnis eingestellt werden kann, beispielsweise beträgt bei 500 kg Granulat in 1000 kg Wasser das Phasenverhältnis Granulat zu Wasser 0,5.

Die Menge an Granulat, welches in die Suspension gemäß Schritt (i) eingebracht wird, ergibt sich aus dem oben beschriebenen Phasenverhältnis von Granulat zu Suspendiermedium. Bevorzugt wird das Granulat in einem Rührreaktor in Wasser suspendiert. Dabei werden bevorzugt mindestens ein Suspendierhilfsmittel zugesetzt, um eine gleichmäßige Verteilung des Granulates im Suspendiermedium zu gewährleisten.

Geeignete Suspendierhilfsmittel sind wasserunlösliche anorganische Stabilisatoren, wie beispielsweise Tricalciumphosphat, Magnesiumpyrophosphat, Metallcarbonate, ferner Polyvinylalkohol und Tenside. Diese Suspendierhilfsmittel, insbesondere die genannten wasserunlöslichen anorganischen Stabilisatoren, werden üblicherweise in Mengen von 0,005 bis 10 Gew.-%, bezogen auf die gesamte Suspension, eingesetzt. Ionische Tenside, beispielsweise Natriumdodecyl-arylsulfonat, oder nichtionische Tenside, beispielsweise Fettalkoholethoxylate wie sie beispielsweise in "Ullmann's Encyclopedia of Industrial Chemistry, Sixth Edition, Topic: Surfactants" beschrieben werden, werden üblicherweise in einer Menge von 2 bis 2000 ppm, insbesondere 2 bis 500 ppm, bezogen auf die gesamte Suspension, eingesetzt. Üblicherweise wird eine wasserunlösliche Verbindung in Kombination mit einer oberflächenaktiven Substanz (Tensid) eingesetzt.

In dem erfindungsgemäßen Verfahren kann aber auch auf einen wasserunlöslichen anorganischen Stabilisator verzichtet werden.

Schritt (i) des erfindungsgemäßen Verfahrens kann bei allen geeigneten Temperaturen durchgeführt werden. Diese Temperaturen sind dem Fachmann bekannt, beispielsweise wird Schritt (i) des erfindungsgemäßen Verfahrens im Allgemeinen bei einer Temperatur durchgeführt, bei der das verwendete Suspendiermedium flüssig ist, beispielsweise bei einer Temperatur von 15 bis 35 °C, besonders bevorzugt bei Umgebungstemperatur.

Schritt (ii) des erfindungsgemäßen Verfahrens umfasst das Imprägnieren des in der Suspension aus Schritt (i) enthaltenen Granulates mit mindestens einem Treibmittel, um ein mit Treibmittel beladenes Granulat in Suspension zu erhalten.

In Schritt (ii) des erfindungsgemäßen Verfahrens wird beispielsweise in einem Imprägnierbehälter, z.B. in einem Rührkesselreaktor gearbeitet. In dem Reaktor, beispielsweise in einem Imprägnierkessel, liegt im Allgemeinen die Suspension aus Schritt (i) des erfindungsgemäßen Verfahrens vor, bevorzugt als Minigranulat, in Wasser als Suspendiermedium, sowie gegebenenfalls ein Suspendierhilfsmittel. Zu dieser Suspension wird nun bevorzugt mindestens ein Treibmittel zudosiert.

Im Allgemeinen können alle dem Fachmann bekannten Treibmittel eingesetzt werden. Der Siedepunkt des Treibmittels liegt im Allgemeinen bei Normaldruck zwischen -25 und 150 °C, insbesondere zwischen -10 und 125 °C.

Das Treibmittel ist vorzugsweise ein linearer oder cyclischer aliphatischer Kohlenwasserstoff, wie Methan, Ethan, n-Propan, iso-Propan, n-Butan, iso-Butan, Pentane, Cyclopentan, Hexane und Heptane, halogenierte Kohlenwasserstoffe wie Dichlordifluormethan, Trichlormonofluormethan, ein Alkohol, wie Methanol, Ethanol, n-Propanol, iso-Propanol und n-Butanoi, ein Keton, wie 3,3-Dimethyl-2-butanon und 4-Methyl-2-pentanon, ein Ether, Ester oder Stickstoff, Luft oder Kohlendioxid. Auch Treibmittelmischungen können eingesetzt werden. Vorzugsweise wird als Treibmittel Butan - in der Praxis oft ein technisches Gemisch aus n- und iso-Butan - verwendet und als Co-Treibmittel Stickstoff eingesetzt.

Durch die unterschiedlichen Löslichkeiten der Treibmittel in den erfindungsgemäßen Polyestern, kann durch die Wahl des Treibmittels und die verwendete Menge des Treibmittels, die Eigenschaften der expandierten Schaumstoffpartikel beeinflusst werden, insbesondere die Schüttdichte, die Zelligkeit und die Kristallinität. Diese Partikeleigenschaften beeinflussen wiederum die spätere Verarbeitbarkeit und die Eigenschaften der aus der Verarbeitung resultierenden Formteile.

Bevorzugt werden als Treibmittel n-Butan, iso-Butan, das bereits erwähnte technische Gemisch aus beiden Butanen, Kohlendioxid und/oder Stickstoff und insbesondere bevorzugt n-Butan oder Kohlendioxid eingesetzt. Kohlendioxid und/oder Stickstoff können wie bereits erwähnt als Co-Treibmittel eingesetzt werden.

Ebenso wird das mindestens eine Treibmittel im Allgemeinen in einer Menge von 1 bis 50 Gew.-%, bevorzugt 1 bis 30 Gew.-%, besonders bevorzugt 5 bis 25 Gew.-%, jeweils bezogen auf das Granulat, eingesetzt. Bei dieser Treibmittelmenge wird insbesondere eine gute Imprägnierqualität gewährleistet. Das Treibmittel kann auf einmal oder in Teilportionen zugeführt werden. Ein Co-Treibmittel, wie z.B. Stickstoff wird üblicherweise bei einer Onset-Temperatur unterhalb des ersten Schmelzpeaks im DSC des erfindungsgemäßen Polyestergemisches zugeführt, z.B. bei 50 °C. Dabei wird durch Aufpressen des Co-Treibmittels der Innendruck im Imprägnierreaktor um 2- 15 bar erhöht.

Der Reaktorinhalt wird im Allgemeinen mit hoher Aufheizrate, d.h. > 1,5 °C/min, vorzugsweise > 2,0°C/min auf eine Temperatur der Suspension von 90-110 °C erhitzt. Die Treibmittelzugabe kann dabei vor, während oder nach dem Aufheizen des Reaktorinhalts, bevorzugt vor dem Aufheizen, erfolgen. Das Treibmittel sollte jedoch vor dem Beginn der Haltezeit zugegeben werden. Die eigentliche Imprägniertemperatur, d.h. die Temperatur bei der im Schritt (iii) eine schlagartiger Entspannung erfolgt, sollte in der Nähe der Erweichungstemperatur des Copolyesters liegen, beispielsweise 30 °C unter bis 20 °C über der Schmelztemperatur (Kristallitschmelzpunkt) des Polyesters. Bei den erfindungsgemäßen Copolyestern liegt die Imprägniertemperatur generell bei 100 bis 140°C, bevorzugt bei 100 bis 130°C. Je nach Menge und Art des Treibmittels sowie nach der Höhe der Temperatur stellt sich im verschlossenen Reaktor ein Druck (Imprägnierdruck) ein, der im Allgemeinen 10 bis 40 bar Überdruck beträgt.

Durch die bei den Imprägnierbedingungen vorliegende erhöhte Temperatur und den Überdruck diffundiert Treibmittel in die Granulatpartikeln der erfindungsgemäßen Copolyester hinein. Je nach Art und Konzentration des Treibmittels, dem Partikelgewicht, dem gewählten Phasenverhältnis sowie des Füllgrades des Kessels erfolgt dies mit unterschiedlicher Geschwindigkeit. Nur bei einer vollständigen Imprägnierung können jedoch im Schritt (iii) des Verfahrens Schaumstoffpartikel mit dem gewünschten Eigenschaftsprofil erhalten werden.

Die gewählten Imprägnierparameter Partikelgewicht, Suspendiermedium, Art und Konzentration des Treibmittels, Phasenverhältnis, Füllgrades des Kessels und IMT beeinflussen in gewissen Grenzen die spätere Kristallinität der Schaumstoffpartikel und damit deren weitere physikalischen Partikeleigenschaften sowie deren Eigenschaften bei der Verarbeitung zum Formteil. Wir haben nun gefunden, dass der essentielle Parameter zur Einstellung der Kristallinität der Schaumstoffpartikel eine verlangsamte Aufheizrate 5°C vor der Erreichen der IMT ist. Insbesondere hat sich eine mittlere Aufheizrate von 0,05 bis 1,5 °C/min, bevorzugt 0,1 bis 1,0°C/min und besonders bevorzugt 0,1 bis 0,8°C/min, 5°C vor dem Erreichen der IMT als vorteilhaft erwiesen.

Die langsame mittlere Aufheizrate im Bereich des IMT entspricht in der Praxis einer Haltezeit der Suspension während des Imprägniervorgangs in einem Temperaturbereich von 5°C unter der IMT und 2°C über der IMT für einen Zeitraum von 3 bis 100 Minuten, vorzugsweise 5 bis 50 Minuten und insbesondere bevorzugt von 15 bis 40 Minuten.

Mit hohen mittleren Heizraten (> 1,5 °C/min) bzw. Haltezeiten unter 3 Minuten kann selbst bei hohen Treibmittelkonzentrationen bzw. durch eine Erhöhung der IMT weder niedrige Schüttdichten (< 300 kg/m$^3$) noch akzeptable Imprägnierqualitäten erreicht werden. Die Homogenität des Produkts (enge Partikelgrößenverteilung) verschlechtert sich teilweise dramatisch. Noch niedrigere mittlere Heizraten bzw. noch längere Haltezeiten über 100 Minuten bringen keine nennenswerte Verbesserung und sind wirtschaftlich nicht sinnvoll.

Ziel des erfindungsgemäßen Verfahrens ist eine enge Partikelgrößenverteilung innerhalb einer Charge und eine vollständige Expansion der Ausgangsgranulate zu Schaumstoffpartikeln. Dennoch muss üblicherweise die Charge von ungeschäumtem oder unvollständig geschäumtem Material mit einem Sieb mit der Maschenweite M M= PD *1,1 abgetrennt werden, wobei PD bei UWG dem mittlere Partikeldurchmesser und bei Stranggranulat dem längeren Durchmesser der runden oder ellipsoiden Schnittfläche entspricht. Bei einer ungenügenden Imprägnierqualität liegt der Siebabfall über 15 %, d,h. die Gutfraktion (Ausbeute) <95%.%. Bei einer akzeptablen Homogenität liegt der Siebabfall zwischen 5% und 15% und bei einer guten Homogenität liegt der Siebabfall <5%., d.h. die Ausbeute über 95%.

Die Partikel sollten auch zu einer gleichmäßig Zellstruktur aufgeschäumt sein Bei einer ungenügenden Zellstruktur liegt im Zentrum, teilweise jedoch auch an der Peripherie eines Schaumstoffpartikels aus der Gutfraktion der Siebung kompaktes Material vor, oder es liegt (wenn auch nur wenige) Zellen über das gesamte Volumen des Schaumstoffpartikels vor, mit Zellstege bzw. Zellwände mit einer Dicke >500$\mu$m.

Eine akzeptable Zellstruktur bedeutete eine vollständige Imprägnierung der Polymerpartikel (zellige Struktur über das gesamte Volumen des Schaumstoffpartikels ohne kompakten Kern bzw. die Zellstege bzw. Zellwände wiesen im Zentrum eine Dicke zwischen 150$\mu$m und 500$\mu$m auf). Die Außenhülle des Schaumstoffpartikels ist feinzellig bis kompakt in einer Schichtdicke von <500 $\mu$m.

Bei einer guten Zellstruktur ist die Dicke der Zellstege bzw. Zellwände im Zentrum kleiner 150$\mu$m. Die Außenhülle des Schaumstoffpartikels ist feinzellig bis kompakt in einer Schichtdicke von <500 $\mu$m.

Je nach Wahl der Imprägnierparameter (z.B ungünstige Kombination von Treibmittelkonzentration, Imprägniertemperatur und Haltezeit) können die Partikel zwar eine gute Zellstruktur aufweisen, dennoch aber am Ende des erfindungsgemäßen Schritts eine total kollabierte Partikeloberfläche aufweisen. Dies geschieht insbesondere wenn auf eine Quenchung verzichtet wird. Ziel ist die Herstellung von prallen Schaumstoffpartikeln mit glatter und glänzender Partikeloberfläche.

Am Ende des erfindungsgemäßen Schrittes (ii) wird ein mit Treibmittel beladenes Granulat in Suspension erhalten.

Schritt (iii) des erfindungsgemäßen Verfahrens umfasst das Entspannen und Abkühlen der in Schritt (ii) erhaltenen Suspension durch Inkontaktbringen mit einem geeigneten Kühlmittel (Quenchprozess). Ein geeigneter Quenchprozess ist beispielsweise in der EP 2336225 beschrieben, in der durch Zusatz einer bestimmten Menge Kühlmittel gequencht wird. Üblicherweise wird in Schritt (iii) des erfindungsgemäßen Verfahrens die Suspension durch eine geeignete Vorrichtung entspannt. Bevorzugt verlässt die Suspension den Imprägnierkessel zunächst durch ein Ventil. Zur Beruhigung des Entspannungsstrahls und Ausbildung einer laminaren Strömung kann dieser anschließend bevorzugt durch ein kurzes Stück eines Entspannungsrohrs geführt werden, das am Ende eine Lochblende trägt. Durch Länge und Durchmesser des Entspannungsrohrs sowie Durchmesser der Lochblende kann die Entspannungszeit kontrolliert werden.

Man kann die Suspension unmittelbar auf Atmosphärendruck, beispielsweise 1013 mbar, entspannen. Bevorzugt wird jedoch in einen Zwischenbehälter entspannt, dessen Druck zum Aufschäumen der treibmittelbeladenen Granulatpartikel ausreicht, jedoch über Atmosphärendruck liegen kann. Beispielsweise entspannt man auf einen Druck von z. B. 0,5 bis 5, insbesondere 1 bis 3 bar Überdruck. Während des Entspannens kann man im Imprägnierbehälter den enstandenen Imprägnierdruck (Druck der durch die gewählten Imprägnierparameter vor dem Entspannungsschritt entstanden ist konstant halten, indem man Treibmittel oder Innertgas wie z.B. Stickstoff nachpresst. Es ist aber auch möglich und oft vorteilhaft, wenige Sekunden vor dem Entspannen den entstandenen Imprägnierdruck durch Aufpressen von Stickstoff weiter zu erhöhen (Auspressdruck), im Allgemeinen bis auf 40 bar und dann diesen Auspressdruck ebenfalls konstant zu halten. Die Erhöhung des Auspressdrucks führt insbesondere zu niedrigeren Schüttdichten und zu einem homogeneren Produkt (engere Partikelgrößenverteilung). Während des Entspannens dehnt sich das in dem Granulat enthaltene Treibmittel aus, so dass expandierte Schaumstoffpartikel erhalten werden. Somit wird nach dem Entspannen eine Suspension von expandierten Schaumstoffpartikeln erhalten.

Während des Entspannungsschritts kann die Suspension mit einem geeigneten flüssigen Kühlmittel in Kontakt gebracht werden (Quenchung). Die Zudosierung des Kühlmittels erfolgt im Allgemeinen über eine oder mehrere ringförmig angeordnete Düsen kurz nach der entsprechenden Entspannungsvorrichtung. Dies führt zu Schaumstoffpartikeln mit einer dickeren Haut und dadurch zu einer glatteren und glänzenderen Partikeloberfläche im Vergleich zu einem Entspannungsschritt ohne Quenchung. Solche Produkte führen zu Vorteilen bei der späteren Verarbeitung zu Formteilen und bei den resultierenden Formteilen (glattere,glänzendere Formteiloberfläche). Ein entsprechender Prozess ist beispielsweise für Polypropylenpartikelschaumstoffe in der EP 2336225 beschrieben. Als Kühlmittel wird bevorzugt Wasser mit einer Temperatur zwischen 5°C und 50 °C verwendet. Das Mengenverhältnis des Kühlmittels zur Menge des verwendeten Suspendiermittels liegt mindestens zwischen 0,3 und 20 und bevorzugt zwischen 0,6 und 10.

Die expandierten Schaumstoffpartikel können in üblicher Weise aus der Suspension abgetrennt werden, beispielsweise durch Filtrieren, beispielsweise mit einem Maschen- oder Bogensieb oder über eine kontinuierlich arbeitende Zentrifuge. Des Weiteren kann gegebenenfalls vor oder nach dem Abtrennen noch anhaftendes Suspendier- und/oder Suspendierhilfsmittel entfernt werden. Die expandierten Schaumstoffpartikel können anschließend gewaschen und getrocknet werden.

In einem weiteren Schritt werden zumindest ungeschäumte Partikel mit geeigneten Sieben abgetrennt.

Die nach Schritt (iii) erhaltenen expandierten Schaumstoffpartikel weisen üblicherweise eine Schüttdichte von 5 bis 300 kg/m$^3$, bevorzugt von 30 bis 200 kg/m$^3$ und besonders bevorzugt von 60 bis 120 kg/m$^3$ auf.

In einer weiteren Ausführungsform des erfindungsgemäßen Verfahrens werden die in Schritt (iii) erhaltenen expandierten Schaumstoffpartikel (expandierte Schaumstoffpartikel S) weiter aufgeschäumt, um expandierte Schaumstoffpartikel N mit einer geringeren Schüttdichte zu erhalten. Dieser Schritt wird auch "Nachschäumen" genannt. Dieser Zusatzschritt wird insbesondere angewandt, um den Transport- und Lagervorteil von Schaumstoffpartikeln mit hohen Schüttdichten zu nutzen. Eine benötigte niedrige Schüttdichte kann dann erst bei Bedarf hergestellt werden.

Verfahren, um die in Schritt (iii) des erfindungsgemäßen Verfahrens erhaltenen expandierten Schaumstoffpartikel S weiter aufzuschäumen, sind dem Fachmann bekannt und werden beispielsweie in EP 1 533 335 beschrieben. Die Schaumstoffpartikel S können gegebenenfalls vor dem Nachschäumen mit einem Antiverklebungsmittel versehen werden. Dies geschieht in einer bevorzugten Ausführungsform durch Beschichten. Typische Antiverklebungsmittel sind ebenfalls in der EP 1 533 335 beschrieben.

Das Verhältnis von Schüttdichte der expandierten Schaumstoffpartikel S zu der Schüttdichte der nachgeschäumten expandierten Schaumstoffpartikel N, der so genannte Expandierfaktor, liegt besonders bevorzugt bei 1,2 bis 3.

Die erfindungsgemäß hergestellten expandierten Schaumstoffpartikel S oder N sind überwiegend geschlossenzellig, wobei die Bestimmung des Volumenanteils geschlossener Zellen in Anlehnung an DIN EN ISO 4590 vom 01.08.2003 erfolgt und weisen im Allgemeinen eine Zellendichte (Anzahl der Zellen/Fläche) von 1 bis 750 Zellen/mm$^2$, vorzugsweise 2 bis 500 Zellen/mm$^2$, insbesondere 5 bis 200 Zellen/mm$^2$ und besonders bevorzugt 10 bis 100 Zellen/mm$^2$, auf.

Die expandierten Schaumstoffpartikel S oder N sind in der Regel zumindest annähernd kugelförmig und weisen üblicherweise einen Durchmesser von 0,1 bis 30 mm, bevorzugt 0,2 bis 25 mm und insbesondere 2,5 bis 12 mm auf. Bei nicht kugelförmigen, z. B. länglichen, zylinderförmigen oder ellipsoiden Schaumstoffpartikeln, ist mit Durchmesser die längste Abmessung gemeint.

Zur Charakterisierung der kristallinen Struktur, können die expandierten Schaumstoffpartikel mit der Differential Scanning Calorimetrie (DSC) nach ISO 11357-3 (Deutsche Version vom 01.04.2013) untersucht werden. Hierzu werden 3 -5 mg der Schaumstoffpartikel zwischen 20°C und 200°C mit einer Aufheizrate von 20 °C/min aufgeheizt und der resultierende Wärmestrom im 1. Lauf bestimmt.

Es können im 1.Lauf der DSC jeweils mindestens zwei bis zu fünf, üblicherweise jedoch vier endotherme Peaks detektiert werden.

Es hat sich nun gezeigt, dass eine gute Verarbeitbarkeit - insbesondere Verschweißung - der Schaumstoffpartikel vorliegt, wenn die Summe der endothermen Peaks (d.h. in Abb. 1 die Summe der Wärmemengen entsprechend den Flächen A, B, C, D und E) eine Wärmemenge von mindestens 5 J/g ergibt. Durch die bessere Verschweißung sind Formteile mit verbesserten mechanischen Eigenschaften z.B. beim Zugversuch zugänglich.

Die vorliegende Anmeldung betrifft auch expandierte Schaumstoffpartikel, erhältlich durch das erfindungsgemäße Verfahren. Diese unterscheiden sich von den aus WO00/068303 bekannten Schaumstoffpartikeln dadurch, dass sie eine Zweifach- bzw. Mehrfachpeakstruktur im DSC nach ISO 11357-3 (Deutsche Version vom 01.04.2013) aufweisen. Die höhere Kristallinität der erfindungsgemäßen Schaumstoffpartikel wird in der gemessenen endothermen Wärmemenge (größer/gleich 5 J/g) im DSC nach ISO 11357-3 (Deutsche Version vom 01.04.2013) deutlich. Im Gegensatz zu EP1378538 treten ausschließlich endotherme Wärmeströme auf.

Die Schaumstoffpartikel S oder N können mit einem Antistatikum versehen werden. Dies geschieht in einer bevorzugten Ausführungsform durch Beschichten.

Aus den erfindungsgemäß hergestellten expandierten Schaumstoffpartikeln S oder N kann man nach dem Fachmann bekannten Verfahren geschäumte Formkörper (Schaumstoffe) herstellen. Beispielsweise können die expandierten Schaumstoffpartikel S oder N in kontinuierlichem oder diskontinuierlichem Verfahren mit Hilfe eines Klebemittels miteinander verklebt werden, beispielsweise mit literaturbekannten Polyurethanklebern.

Bevorzugt werden die expandierten Schaumstoffpartikel jedoch in einer geschlossenen Form unter Wärmeeinwirkung miteinander verschweißt. Dazu füllt man die Schaumstoffpartikel in die Form und leitet nach Schließen der Form Wasserdampf oder Heißluft ein, wodurch die Schaumstoffpartikel weiter expandieren und miteinander zum Schaumstoff, vorzugsweise mit einer Dichte im Bereich von 8 bis 300 kg/m$^3$, verschweißen. Die Schaumstoffe können Halbzeuge sein, beispielsweise Platten, Profile oder Bahnen, oder fertige Formteile mit einfacher oder komplizierter Geometrie. Demnach schließt der Begriff Schaumstoff, Schaumstoffhalbzeuge und Schaumstoff-Formteile ein.

Die vorliegende Erfindung betrifft daher auch einen Schaumstoff, enthaltend expandierte Schaumstoffpartikel S oder N, herstellbar, bevorzugt hergestellt, durch das erfindungsgemäße Verfahren.

Des Weiteren betrifft die vorliegende Erfindung ein Formteil, herstellbar, bevorzugt hergestellt, aus den erfindungsgemäß herstellbaren expandierten Schaumstoffpartikeln S oder N.

Die vorliegende Erfindung betrifft auch ein Formteil, enthaltend durch das erfindungsgemäße Verfahren herstellbare expandierte Schaumstoffpartikel S oder N.

Die vorliegende Erfindung betrifft auch ein Verfahren zur Herstellung eines Formteils, umfassend wenigstens die Schritte:

1. Herstellen von expandierten Schaumstoffpartikeln S oder N nach dem oben genannten erfindungsgemäßen Verfahren und
2. Aufschäumen der Schaumstoffpartikel S oder N in einer entsprechenden Form, um ein Formteil zu erhalten.

Bei diesem Verfahren werden zunächst expandierte Schaumstoffpartikel S oder N gemäß den Schritten (i) bis (iii) wie oben beschrieben hergestellt. Optional können aus den expandierten Schaumstoffpartikeln S die Schaumstoffpartikel N durch Nachschäumen hergestellt werden. Der Schritt (2.) umfasst das Aufschäumen der expandierten Schaumstoffpartikel S oder N in einer entsprechenden Form, um ein Formteil zu erhalten.

In einer bevorzugten Ausführungsform wird Schritt (2.) durchgeführt, indem man expandierten Schaumstoffpartikel S oder N in einer geschlossenen Form unter Wärmeeinwirkung miteinander verschweißt. Dazu füllt man die Schaumstoffpartikel bevorzugt in die Form und leitet nach Schließen der Form Wasserdampf oder Heißluft ein, wodurch die Schaumstoffpartikel weiter expandieren und miteinander zum Formteil, vorzugsweise mit einer Dichte im Bereich von 8 bis 350 kg/m$^3$, verschweißen. Das Verhältnis der Dichte des Formteils zu der Schüttdichte der expandierten Schaumstoffpartikel beträgt dabei im Allgemeinen > 1,1.

In einer ganz besonders bevorzugten Ausführungsform werden die Formteile nach dem Fachmann bekannten Verfahren wie Druckfüllverfahren oder Kompressionsverfahren, dem Tauchkantenverfahren, bzw. Crack-Spalt-Verfahren oder nach vorheriger Druckbeladung, erhalten. Entsprechende Verfahren sind in DE-A 25 42 453 und EP-A-0 072 499 offenbart.

Die vorliegende Erfindung betrifft auch die Verwendung der erfindungsgemäß herstellbaren expandierten Schaumstoffpartikel zur Herstellung von Formteilen.

Formteile aus Schaumstoffpartikeln, die zu 100% aus biologisch abbaubaren Polyesters auf Basis von aliphatischen oder aliphatischen und aromatischen Dicarbonsäuren und aliphatischen Diolen (z.B. Polyester A) bestehen zeigen üblicherweise gute Zug- und Druckfestigkeiten, einen hohen Rebound und einen ausreichend geringen Druckverformungsrest sowie akzeptable Temperaturbeständigkeit.

Für bestimmte Anwendungen im Sport- und Freizeitbereich, insbesondere aber in der Verpackungs- oder Automobilindustrie sowie für technische Anwendungen, werden aber eher erhöhte Druckfestigkeiten mit reduziertem Rebound, was gleichbedeutend mit einer erhöhten Energieabsorption ist, gefordert. Durch Variation der Konzentration des eingesetzten PLA können diese Zielgrößen gezielt, entsprechend dem individuellen Anwendungsprofil eingestellt werden

Die Erfindung wird anhand der folgenden Beispiele erläutert, ohne sie dadurch zu beschränken:

Beispiele:

I. Als Granulate eingesetzte Polyestermischungen:

In den erfindungsgemäßen Beispielen wurden die in Tabelle 1 aufgelisteten Polyestermischungen eingesetzt.

Eingesetzte Materialien:

Polyester A:

Zur Herstellung des Polyesters wurden 87,3 kg Dimethylterephthalat, 80,3 kg Adipinsäure, 117 kg 1,4-Butandiol und 0,2 kg Glycerin zusammen mit 0,028 kg Tetrabutylorthotitanat (TBOT) gemischt, wobei das Molverhältnis zwischen Alkoholkomponente und Säurekomponenten 1,30 betrug. Das Reaktionsgemisch wurde auf eine Temperatur von 180°C erhitzt und bei dieser Temperatur 6h lang umgesetzt. Anschließend wurde die Temperatur auf 240°C erhöht und die überschüssige Dihydroxyverbindung unter Vakuum über einen Zeitraum von 3h abdestilliert. Anschließend wurden bei 240°C 0,9 kg Hexamethylendiisocyanat innerhalb 1h langsam zudosiert.

Der so erhaltene Polyester A wies eine Schmelztemperatur nach DSC von 119°C und ein Molekulargewicht (Mn) von 23000 g/mol sowie einen MVR (bei 190°C; 2,16 kg) von 3,3 g/10 min auf. Dieser Polyester A wurde auf einem Extruder mit Unterwassergranulierung (UWG) zu Partikeln mit einem Gewicht von 40 mg (A1) und von 10 mg (A2) granuliert.

i-1 Polyestermischung (erfindungsgemäß)

88,4 kg Polyester A, 1, 9 kg Polymilchsäure (PLA) Ingeo® 4043D der Firma NatureWorks LLC, 2,4 kg Calciumcarbonat, 0,1 kg Joncryl® ADR 4368 der Firma BASF B. V., 0,1 kg Erucasäureamid, wurden auf einem Extruder vom Typ Werner & Pfleiderer MC-40 bei einer Massetemperatur von ca. 220-260 °C compoundiert und mit Unterwassergranulierung (UWG) zu Partikeln mit einem mittleren Gewicht (arithmetrisches Mittel) von 31 mg granuliert.

Vi-2 Polyestermischung (Vergleichssystem)

20kg Polyester A1, 80 kg Polymilchsäure (PLA) Ingeo® 4043D der Firma NatureWorks LLC, wurden auf einem Extruder vom Typ Werner & Pfleiderer MC-40 bei einer Massetemperatur von ca. 220-260 °C compoundiert. und mit Unterwassergranulierung (UWG) zu Partikeln mit einem mittleren Gewicht (arithmetrisches Mittel) von 31 mg granuliert.

Tabelle 1:

| Polyestermischung | Granulat-form | Mittleres Granulatgewicht(Spannweite) [mg] | Schmelzpunkt (DSC) [°C] | MVR ISO 1133 (190 °C; 5kg) [ml/10 min] |
|---|---|---|---|---|
| i-1 | UWG | 31 (30-33) | 115 - 125 140 - 155 | 5,0 - 11,0 |
| Vi-2 | UWG | 29 (27-31) | 110-120 140-155 | 7,5-11,5 |

II. Allgemeine Versuchsbeschreibung der Schritte (i) bis (iii) des erfindungsgemäßen Verfahrens:

Die Versuche wurden mit einem Kesselfüllgrad von 80 % durchgeführt.
Beispiele 1 bis 5 und V6 bis V9 mit Phasenverhältnis 0,38
100 Gewichtsteile (entsprechend 26,9 Gew.-%, bezogen auf die gesamte Suspension ohne Treibmittel) des Granulats enthaltend die Polyestermischung i-1 oder Vi-2, 265 Gewichtsteile (entsprechend 71,3 Gew.-%, bezogen auf die gesamte Suspension ohne Treibmittel) Wasser, 6,7 Gewichtsteile Calciumcarbonat, 0,13 Gewichtsteile einer oberflächenaktiven Substanz und die entsprechende Menge Treibmittel (bezogen auf die eingesetzte Granulatmenge) wurden unter Rühren bis zur Imprägniertemperatur (IMT) erhitzt. Dann wurde bei 50°C der Flüssigphase zusätzlich Stickstoff aufgepresst und der Innendruck auf einen vorher definierten Druck (z.B. 8 bar) eingestellt.
Anschließend wird bei Erreichen der IMT und der entsprechenden IMP nach Einhaltung der Haltezeit über eine Entspannungsvorrichtung entspannt.
Die genauen Herstellparameter des erfindungsgemäßen Beispiele 1 bis 5 sowie der Vergleichsbeispiele V6 bis V9 sowie die Eigenschaften der resultierenden Schaumstoffpartikel S sind in Tabelle 2 aufgeführt.

III. Herstellung der Formteile:

Die Herstellung der Formteile erfolgte auf einem handelsüblichen EPP-Formteilautomaten (Typ K68 der Fa. Kurtz GmbH). Es wurde mit Werkzeugen der Maße 315x210x25 mm und 300*200*60 mm quaderförmige Prüfkörper mit unterschiedlichen Dicken hergestellt. Die Formteile mit 60 mm Dicke wurden nach dem Druckfüllverfahren hergestellt, die Formteile mit 25 mm Dicke wurden nach dem Crackfüllverfahren hergestellt.
Nach der Herstellung wurden die Formteile 16 h bei 60°C gelagert.
Die Ergebnisse der Formteilprüfungen sind in Tabelle 3 aufgeführt.

Prüfmethoden:

Schüttdichte

Die Bestimmung erfolgte in Anlehnung an DIN EN ISO: 2000-1. Dabei wurden die Schaumstoffpartikel mit Hilfe eines Trichters mit festgelegter Geometrie (vollständig mit Schüttgut gefüllt) in einen Meßzylinder mit bekanntem Volumen eingefüllt, der Überschuß des Schüttguts mit einem geradkantigen Stab vom Meßzylinder abgestreift und der Inhalt des Meßzylinders durch wiegen festgestellt.

Der verwendete Trichter war 40 cm hoch, hatte einen Öffnungswinkel von 35°C und einen Auslauf mit 50 mm Durchmesser. Der Meßylinder hatte einen Innendurchmesser von 188 mm und ein Volumen von 10 l.

Die Schüttdichte SD berechnete sich aus Masse der Schüttung [kg] / 0,01 [m$^3$].

Als Schüttdichte wurde der Mittelwert aus 3 Messungen in kg/m angegeben.

DSC (Differential Scanning Calorimetry)

Durchführung nach ISO 11357-3 (Deutsche Fassung vom 01.04.2013) mit DSC Q100 der Fa. TA Instruments.

Zur Bestimmung des Schmelzpunktes des eingesetzten Polyesters in Granulat-form wurden 3 - 5 mg in einem 1. Lauf zwischen 20°C und 200°C mit einer Aufheizrate von 20 °C/min aufgeheizt, anschließend mit 10 °C/min auf 20°C abgekühlt, gefolgt durch einen weiteren Aufheizzyklus (2. Lauf) mit einer Aufheizrate von 10°C/min.

Als Schmelzpunkt wurde die Temperatur des Peakmaximums im 2. Lauf angegeben.

Zur Charakterisierung der kristallinen Struktur der expandierten Schaumstoffpartikel werden 3 - 5 mg zwischen 20°C und 200°C mit einer Aufheizrate von 20 °C/min aufgeheizt und der resultierende Wärmestrom bestimmt.

Imprägnierqualität

Die Imprägnierqualität wurde nach einer Notenskala bestimmt:

- Ungenügend
o Akzeptabel
+ Gut

Die Imprägnierqualität wurde nach den drei Kriterien:

- Homogenität einer Charge (Partikelgrößenverteilung PGV)
- Qualität der Partikeloberfläche
- Zellstruktur der Partikel

bewertet. Jedes Kriterium wurde nach der obigen Notenskala eingestuft. Die Gesamtnote der Imprägnierqualität war die schlechteste Einzelnote.

Kriterium Homogenität einer Charge:

Die Charge Schaumstoffpartikel wurde von ungeschäumtem oder unvollständig geschäumtem Material mit einem Sieb mit der Maschenweite M M= PD *1,25 wobei PD bei UWG dem mittleren Partikeldurchmesser und bei Stranggranulat dem längeren Durchmesser der runden oder ellipsoiden Schnittfläche entsprach. Bei einer ungenügenden Homogenität lag der Siebabfall über 15 %, d.h. die Gutfraktion (Ausbeute) <85%. Bei einer akzeptablen Homogenität lag der Siebabfall zwischen 5% und 15% und bei einer guten Homogenität lag der Siebabfall <5%., d.h. die Ausbeute über 95%.

Kriterium Qualität der Partikeloberfläche

Bei einer ungenügenden Partikeloberfläche war das Partikel vollständig kollabiert. Bei einer akzeptablen Partikeloberfläche war die Partikeloberfläche rauh und matt. Bei einer guten Partikeloberfläche war das Partikel prall, die Oberfläche glatt und glänzend.

Kriterium Zellstruktur der Partikel:

Bei einer ungenügenden Zellstruktur lag im Zentrum, teilweise jedoch auch an der Peripherie des Schaumstoffpartikels kompaktes Material vor, oder es lagen (wenn auch nur wenige) Zellen über das gesamte Volumen des Schaumstoffpartikels vor, mit Zellstege bzw. Zellwände mit einer Dicke >500$\mu$m.

Eine akzeptable Zellstruktur bedeutete eine vollständige Imprägnierung der Polymerpartikel (zellige Struktur über das gesamte Volumen des Schaumstoffpartikels ohne kompakten Kern bzw. die Zellstege bzw. Zellwände wiesen im Zentrum eine Dicke zwischen 150$\mu$m und 500$\mu$m auf. Die Außenhülle des Schaumstoffpartikels war feinzellig bis kompakt in einer Schichtdicke von <500 $\mu$m.

Bei einer guten Zellstruktur war die Dicke der Zellstege bzw. Zellwände im Zentrum kleiner 150$\mu$m. Die Außenhülle des Schaumstoffpartikels war feinzellig bis kompakt in einer Schichtdicke von <500 $\mu$m.

Geschlossenzelligkeit

Die Bestimmung des Volumenanteils geschlossener Zellen erfolgte in Anlehnung an DIN EN ISO 4590 vom 01.08.2003.

Mittlerer Zelldichte

Die Beurteilung der Schaumstoffstruktur erfolgte durch optische Bildanalyse mit einem PORE!SCAN Advanced Plus der Fa. Goldlücke Ingenieurleistungen. Dazu wurden jeweils 10 Schaumstoffpartikel halbiert und jeweils eine Schnittfläche vermessen. Bei nicht kugelförmigen, z. B. länglichen, zylinderförmigen oder ellipsoiden Schaumstoffpartikeln erfolgte die Teilung in Richtung der längsten Abmessung.

Die mittlere Zelldichte ist das Verhältnis der Anzahl der Zellen auf der Schnittfläche zu der Schnittfläche und wird in $1/mm^2$ angegeben.

Der Wert wird einer Klassifizierung zugeordnet:

| Klassifizierung | mittlere Zelldichte [$1/mm^2$] |
|---|---|
| F Feinzellig | > 100 |
| N Normalzellig | 10 - 100 |
| G Grobzellig | <10 |
| Verdichtungsgrad VG | |

Der Verdichtungsgrad VG ist das Verhältnis von Formteildichte (FT-Dichte) zu Schüttdichte

$$(SD). \; VG = FT\text{-Dichte} \; [kg/m^3] \; / \; SD \; [kg/m^3].$$

Druckverformungsrest (DVR)

Der Druckverformungsrest wurde in Anlehnung an DIN EN ISO 1856, Methode C bestimmt. Nach der Entfernung des Probekörpers aus der Prüfvorrichtung wurde die Dicke erst 24 h nach Erholung des Probekörpers gemessen.

Temperaturlagerung

Die Probekörper (180 x 60 x 40 mm) wurden in den auf die entsprechende Lagertemperatur vorgeheizten Wärmeschrank (100°C) gelegt und bei dieser Temperatur für 240 h gelagert. Beurteilung der Oberflächen / Kanten wie folgt:

Die Oberfläche und Kante der Prüfkörper wurde während der Lagerzeit alle 24 h entsprechend einer Notenskala beurteilt. Hierzu wurden die Prüfkörper kurzzeitig aus dem Wärmeschrank entnommen.

| Bewertung | Note |
|---|---|
| Keine Veränderung | 1 |
| Abrieb Kante | 2 |
| Zerfall Kante | 3 |
| Zerfall der Kante plus 0 bis 5 mm tiefe Schädigung der Oberfläche | 4 |
| Zerfall der Kante plus 5 bis 10 mm tiefe Schädigung der Oberfläche | 5 |
| Probe zerfällt unter leichtem Daumendruck | 6 |

Die Probekörper wurden nach Beendigung der Temperaturlagerung sorgfältig aus dem Wärmeschrank entnommen, bei Raumtemperatur 24h bei Raumbedingungen gelagert und anschließend die Dimensionsänderung mit dem Messschieber vermessen.

Die Dimensionsänderung (Länge, Breite, Höhe) wurde nach folgender Formel berechnet:

$$DÄ = [ ( Lo - L1) / Lo ) ] \times 100$$

DÄ = Dimensionsänderung in %
Lo = ursprüngliches Maß
L1 = Maß nach der Wärmelagerung

Die Temperaturbeständigkeit war in Ordnung (i. O.), wenn Oberflächen und Kanten keine Veränderungen aufweisen und die mittlere Dimensionsänderung über Länge, Breite und Höhe < 10% war.

Tabelle 2:

| Beispiel | Polyester mischung | Treibmittel | Treibmittelkonzentration [%] | N$_2$-Aufpressung bei 50°C auf Innendruck [bar] | Haltezeit (Bereich IMT-5°C bis IMT +2°C) [min] | IMT [°C] | SD [kg/m$^3$] | Imprägnierqualität [Note] | Geschlossenzelligkeit [%] | Mittlere Zelldichte [Note] | DSC Σ Wärmestrom [J/g] |
|---|---|---|---|---|---|---|---|---|---|---|---|
| 1 | i-1 | Butan | 24 | 8 | 23 | 105 | 110 | + | >95 | F | 6,7 |
| 2 | i-1 | Butan | 24 | 8 | 20 | 106 | 81 | + | >95 | F | 5,6 |
| 3 | i-1 | CO$_2$ | 12 | - | 26 | 106 | 175 | + | >95 | N | 9,57 |
| 4 | i-1 | CO$_2$ | 12 | - | 29 | 107 | 165 | + | >95 | N | 6,98 |
| 5 | i-1 | CO$_2$ | 12 | - | 36 | 108 | 155 | + | >95 | N | 5,29 |
| V6 | A1 | Butan | 24 | 8 | 23 | 110 | 97 | + | >95 | G | |
| V7 | Vi-2 | Butan | 24 | 8 | 25 | 110 | 766 | - | n.a. | n.a. | n.a. |
| V8 | Vi-2 | Butan | 24 | 8 | 3 | 125 | 487 | - | n.a. | n.a. | n.a. |
| V9 | Vi-2 | Butan | 24 | 8 | 3 | 134 | *) | - | **) | **) | n.a. |

n.a. nicht anwendbar *) Keine Expansion der Granulatpartikel sondern nur Minigranulat **) Keine Expansion der Granulatpartikel sondern starke Verklebungen, die zu einer Verstopfung des Entspannungsventils führten

Tabelle 3:

| Formteil | Schaumstoff-partikel (Tabelle 2) | | VG | FormteilDichte DIN EN ISO 845 (1.10.2009) [kg/m$^3$] | Zugfestigkeit DIN EN ISO 1798 (1.04.2008) [kPa] | Bruchdehnung DIN EN ISO 1798 (1.04.2008) [%] | Druck-spannung bei 50% Stauchung DIN EN ISO 844 (1.10.2009) [kPa] | Rückprallelastizität DIN EN ISO 8307 (1.03.2008) [%] | T-Lagerung (240h/100°C) |
|---|---|---|---|---|---|---|---|---|---|
| FT-1 | Beispiel 1 | | 1,9 | 210 | 700 | 27 | 535 | 49 | i. O. |
| FT-2 | Beispiel 2 | | 2,3 | 185 | 610 | 30 | 436 | 52 | i. O. |
| FT 3 | Vergleichsbeispiel 6 | | 1,9 | 185 | 785 | 100 | 375 | 63 | i. O. |

**Patentansprüche**

1. Verfahren zur Herstellung von expandierten Schaumstoffpartikeln aus einem Granulat, enthaltend eine Polyestermischung zusammengesetzt aus:

   a) 50 bis 99 Gew.-%, bezogen auf die Komponenten a und b, eines biologisch abbaubaren Polyesters auf Basis von aliphatischen oder aliphatischen und aromatischen Dicarbonsäuren und aliphatischen Diolen, und
   b) 1 bis 50 Gew.-%, bezogen auf die Komponenten a und b, Polymilchsäure, umfassend die folgenden Schritte:

   (i) Herstellen einer Suspension enthaltend ein Granulat der Polyestermischung in einem Suspendiermedium,
   (ii) Imprägnieren des in der Suspension aus Schritt (i) enthaltenen Granulates mit mindestens einem physikalischen Treibmittel, um ein mit Treibmittel beladenes Granulat in Suspension zu erhalten, indem die Mischung unter Rühren bis zur Entspannungstemperatur IMT aufgeheizt wird, und
   (iii) Entspannen der in Schritt (ii) erhaltenen Suspension nach Ablauf einer Haltezeit, um expandierte Schaumstoffpartikel zu erhalten,

   dadurch gekennzeichnet, dass in einem wasserhaltigen Suspendiermittel gefahren wird, das Treibmittel in Schritt (i) oder in Schritt (ii) während der Aufheizphase oder unmittelbar nach der Aufheizphase zugegeben wird und in Schritt (ii) die Suspension nach dem Aufheizen während 3 bis 100 Minuten bei einer Temperatur im Bereich von IMT minus 5°C bis IMT plus 2°C gehalten wird und die Entspannungstemperatur IMT im Bereich von 100 bis 140°C liegt.

2. Verfahren nach Anspruch 1, dadurch gekennzeichnet, dass als Suspendiermedium Wasser eingesetzt wird.

3. Verfahren nach einem der Ansprüche 1 bis 2, dadurch gekennzeichnet, dass der biologisch abbaubare Polyester a) wie folgt zusammengesetzt ist:

   A1) 30 bis 100 mol-%, bezogen auf die Komponenten A1) bis A2), einer aliphatischen Dicarbonsäure oder Mischungen davon,
   A2) 0 bis 70 mol-%, bezogen auf die Komponenten A1) bis A2), einer aromatischen Dicarbonsäure oder Mischungen davon,
   B) 98,5 bis 100 mol-%, bezogen auf die Komponenten A1) bis A2), einer Diolkomponente aus einem $C_2$-bis $C_{12}$-Alkandiol oder Mischungen davon; und
   C) 0,05 bis 1,5 Gew.-%, bezogen auf die Komponenten A1) bis A2) und B, einer Verbindung oder mehrerer Verbindungen ausgewählt aus der Gruppe bestehend aus:

   C1) einer Verbindung mit mindestens drei zur Esterbildung befähigten Gruppen,
   C2) einem di- oder polyfunktionellen Isocyanat,
   C3) einem di- oder polyfunktionellen Epoxid.

4. Verfahren nach Anspruch 3, wobei im biologisch abbaubaren Polyester a):

   - die aliphatische Dicarbonsäure A1) Bernsteinsäure, Adipinsäure oder Sebacinsäure oder Mischungen davon bedeutet;
   - die aromatische Dicarbonsäure A2) Terephthalsäure bedeutet,
   - die Diolkomponente B) 1,4-Butandiol oder 1,3-Propandiol bedeutet,
   - die Komponente C1 Glycerin bedeutet und
   - die Komponente C2 Hexamethylendiisocyanat bedeutet.

5. Verfahren nach Anspruch 3, dadurch gekennzeichnet, dass der biologisch abbaubare Polyester a) Polybutylenadipatcoterephthalat und/oder Polybutylensebacatcoterephthalat ist.

6. Verfahren nach Anspruch 1, dadurch gekennzeichnet, dass das Granlulat der Polyestermischung aus den Komponenten a) und b) ein arithmetisch gemitteltes Partikelgewicht von mindestens 5 mg und höchstens 60 mg besitzt.

7. Verfahren nach Anspruch 1, dadurch gekennzeichnet, dass als Treibmittel n-Butan, iso-Butan oder $CO_2$ eingesetzt wird.

**8.** Verfahren nach Anspruch 1, **dadurch gekennzeichnet, dass** als Nukleierungsmittel 0,02% bis 0,2 Gew.-%, bezogen auf den Polyester, Talkum eingesetzt wird.

**9.** Verfahren nach Anspruch 1, **dadurch gekennzeichnet, dass** in Schritt (ii) bei einer Onset-Temperatur unter dem ersten Schmelzpunkt der Polyestermischung, bestimmt mit DSC, der Gasdruck über der Suspension durch Aufpressen von Stickstoff um 2 bis 15 bar erhöht wird.

**Claims**

**1.** A process for the production of expanded foam beads from pellets comprising a polyester mixture composed of:

> a) from 50 to 99% by weight, based on components a and b, of a biodegradable polyester based on aliphatic or aliphatic and aromatic dicarboxylic acids and on aliphatic diols, and
> b) from 1 to 50% by weight, based on components a and b, of polylactic acid,

comprising the following steps:

> (i) production of a suspension comprising pellets of the polyester mixture in a suspension medium,
> (ii) impregnation of the pellets comprised in the suspension from step (i) with at least one physical blowing agent, in order to obtain blowing-agent-loaded pellets in suspension, by heating the mixture to the depressurization temperature IMT, with stirring, and
> (iii) after expiry of retention time, depressurization of the suspension obtained in step (ii), in order to obtain expanded foam beads,

which comprises proceeding in an aqueous suspension medium, adding the blowing agent in step (i) or in step (ii) during the heating phase or immediately after the heating phase, and in step (ii), after heating, keeping the suspension for from 3 to 100 minutes at a temperature in the range from IMT minus 5°C to IMT plus 2°C, and the depressurization temperature IMT is in the range from 100 to 140°C.

**2.** The process according to claim 1, wherein water is used as suspension medium.

**3.** The process according to either of claims 1 and 2, wherein the biodegradable polyester a) has the following composition:

> A1) from 30 to 100 mol%, based on components A1) to A2), of an aliphatic dicarboxylic acid or a mixture thereof,
> A2) from 0 to 70 mol%, based on components A1) to A2), of an aromatic, dicarboxylic acid or a mixture thereof,
> B) from 98.5 to 100 mol%, based on components A1) to A2), of a diol component made of a $C_2$- to $C_{12}$-alkanediol or a mixture thereof; and
> C) from 0.05 to 1.5% by weight, based on components A1) to A2) and B), of a compound or plurality of compounds selected from the group consisting of:

>> C1) a compound having at least three groups capable of ester formation,
>> C2) a di- or polyfunctional isocyanate,
>> C3) a di- or polyfunctional epoxide.

**4.** The process according to claim 3, wherein in the biodegradable polyester a):

> - the aliphatic dicarboxylic acid A1) is succinic acid, adipic acid, or sebacic acid or a mixture thereof;
> - the aromatic dicarboxylic acid A2) is terephthalic acid,
> - the diol component B) is 1,4-butanediol or 1,3-propanediol,
> - the component C1 is glycerol, and
> - the component C2 is hexamethylene diisocyanate.

**5.** The process according to claim 3, wherein the biodegradable polyester a) is polybutylene adipate-co-terephthalate and/or polybutylene sebacate-co-terephthalate.

**6.** The process according to claim 1, wherein pellets of the polyester mixture of components a) and b) have an arith-

meticaly averaged pellet weight of at least 5 mg and at most 60 mg.

7. The process according to claim 1, wherein n-butane, isobutane, or $CO_2$ is used as blowing agent.

8. The process according to claim 1, wherein from 0.02% to 0.2% by weight, based on the polyester, of talc powder is used as nucleating agent.

9. The process according to claim 1, wherein in step (ii) at an onset temperature below the first melting point of the polyester mixture, determined with DSC, the gas pressure above the suspension is increased by 2 to 15 bar by introducing nitrogen under pressure.

**Revendications**

1. Procédé de fabrication de particules de mousse expansées à partir d'un granulat, contenant un mélange de polyester composé par :

   a) 50 à 99 % en poids, par rapport aux composants a et b, d'un polyester biodégradable à base d'acides dicarboxyliques aliphatiques ou aliphatiques et aromatiques et de diols aliphatiques, et
   b) 1 à 50 % en poids, par rapport aux composants a et b, d'acide polylactique,

   comprenant les étapes suivantes :

   (i) la fabrication d'une suspension contenant un granulat du mélange de polyester dans un milieu de suspension,
   (ii) l'imprégnation du granulat contenu dans la suspension de l'étape (i) avec au moins un agent gonflant physique, afin d'obtenir un granulat chargé avec l'agent gonflant dans la suspension, par chauffage du mélange sous agitation jusqu'à la température de détente IMT, et
   (iii) la détente de la suspension obtenue à l'étape (ii) après l'écoulement d'un temps de maintien afin d'obtenir des particules de mousse expansées, **caractérisé en ce qu'**on travaille dans un milieu de suspension contenant de l'eau, l'agent gonflant est ajouté à l'étape (i) ou à l'étape (ii) pendant la phase de chauffage ou directement après la phase de chauffage et, à l'étape (ii), la suspension est maintenue après le chauffage pendant 3 à 100 minutes à une température dans la plage comprise entre IMT moins 5 °C et IMT plus 2 °C, et la température de détente IMT se situe dans la plage allant de 100 à 140 °C.

2. Procédé selon la revendication 1, **caractérisé en ce que** de l'eau est utilisée en tant que milieu de suspension.

3. Procédé selon l'une quelconque des revendications 1 à 2, **caractérisé en ce que** le polyester biodégradable a) a la composition suivante :

   A1) 30 à 100 % en moles, par rapport aux composants A1) à A2), d'un acide dicarboxylique aliphatique ou de mélanges de celui-ci,
   A2) 0 à 70 % en moles, par rapport aux composants A1) à A2), d'un acide dicarboxylique aromatique ou de mélanges de celui-ci,
   B) 98,5 à 100 % en moles, par rapport aux composants A1) à A2), d'un composant diol constitué par un alcanediol en $C_2$ à $C_{12}$ ou des mélanges de celui-ci, et
   C) 0,05 à 1,5 % en poids, par rapport aux composants A1) à A2) et B), d'un composé ou de plusieurs composés choisis dans le groupe constitué par :

      C1) un composé contenant au moins trois groupes aptes à la formation d'esters,
      C2) un isocyanate di- ou polyfonctionnel,
      C3) un époxyde di- ou polyfonctionnel.

4. Procédé selon la revendication 3, dans lequel, dans le polyester biodégradable a) :

   - l'acide dicarboxylique aliphatique A1) signifie l'acide succinique, l'acide adipique ou l'acide sébacique ou leurs mélanges ;
   - l'acide dicarboxylique aromatique A2) signifie l'acide téréphtalique,
   - le composant diol B) signifie le 1,4-butanediol ou le 1,3-propanediol,

- le composant C1 signifie la glycérine t
- le composant C2 signifie le diisocyanate d'hexaméthylène.

**5.** Procédé selon la revendication 3, **caractérisé en ce que** le polyester biodégradable a) est l'adipate-co-téréphtalate de polybutylène et/ou le sébacate-co-téréphtalate de polybutylène.

**6.** Procédé selon la revendication 1, **caractérisé en ce que** le granulat du mélange de polyester constitué par les composants a) et b) présente un poids de particule en moyenne arithmétique d'au moins 5 mg et d'au plus 60 mg.

**7.** Procédé selon la revendication 1, **caractérisé en ce que** du n-butane, de l'isobutane ou du $CO_2$ est utilisé en tant qu'agent gonflant.

**8.** Procédé selon la revendication 1, **caractérisé en ce que** 0,02 % à 0,2 % en poids, par rapport au polyester, de talc est utilisé en tant qu'agent de nucléation.

**9.** Procédé selon la revendication 1, **caractérisé en ce qu'**à l'étape (ii), à une température de démarrage inférieure au premier point de fusion du mélange de polyester, déterminée par DSC, la pression gazeuse sur la suspension est augmentée de 2 à 15 bar par injection d'azote.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008130226 A
- WO 0068303 A
- EP 1683828 A
- EP 1378538 A
- WO 9209654 A
- WO 9615173 A
- WO 15176 A
- WO 21689 A
- WO 21692 A
- WO 25446 A
- WO 25448 A
- WO 9812242 A

- WO 2006097353 A
- WO 2006097354 A
- WO 2010034689 A
- WO 2010034711 A
- EP 1182225 B1
- EP 1514896 A1
- EP 2336225 A
- EP 1533335 A
- WO 00068303 A
- DE 2542453 A
- EP 0072499 A

**In der Beschreibung aufgeführte Nicht-Patentliteratur**

- Ullmann's Encyclopedia of Industrial Chemistry. vol. A11, 1988